# EUROPÄISCHE PATENTANMELDUNG

(11) **EP 3 293 868 A1**
(43) Veröffentlichungstag der Anmeldung: **14.03.2018**
(21) Anmeldenummer: 16188307.9
(22) Anmeldetag: 12.09.2016
(51) Int. Cl.: H02K 15/04, H02K 15/06

(54) **AUTOMATISIERUNGSSYSTEM UND VERFAHREN ZUR HERSTELLUNG EINER STATORWICKLUNG EINER ELEKTRODYNAMISCHEN MASCHINE**

(71) Anmelder: Siemens Aktiengesellschaft, 80333 München (DE)
(72) Erfinder: Evers, Christoph, 46236 Bottrop (DE); Grau Sorarrain, Esteban, 40217 Düsseldorf (DE); Joswig, Ana, 44227 Dortmund (DE); Lehmann, Christoph, 47506 Neukirchen-Vluyn (DE); Steins, Hendrik, 45134 Essen (DE); Werkmeister, Stephan, 46286 Dorsten (DE); Wysgol, Markus, 44789 Bochum (DE)

(57) **Zusammenfassung**

Die Erfindung betrifft ein Automatisierungssystem (1) zur Herstellung einer Statorwicklung (2) einer elektrodynamischen Maschine, insbesondere eines elektrischen Generators, wobei mehrere Roboter (6a, 6b, 6c, 6d; 7a, 7b, 7c, 7d) mit Roboterarmen (8a, 8b, 8c, 8d; 9a, 9b, 9c, 9d) eingesetzt werden, um die Stabenden (16a, 16b) genau zu positionieren und mit einer Laschenverbindung (13) zu verlöten, wobei die Ansteuerung der Roboterarme (8a, 8b, 8c, 8d; 9a, 9b, 9c, 9d) über eine intelligente Datenbank (10) erfolgt.

## Beschreibung

Die Erfindung betrifft ein Automatisierungssystem zur Herstellung einer Statorwicklung einer elektrodynamischen Maschine, insbesondere eines elektrischen Generators.

Desweiteren betrifft die Erfindung ein Verfahren zum Herstellen einer Statorwicklung einer elektrodynamischen Maschine.

Elektrodynamische Maschinen wie beispielsweise Turbogeneratoren oder elektrische Generatoren umfassen im Wesentlichen einen Stator und einen drehbar angeordneten Rotor. Der Stator umfasst eine Statorwicklung. Der Rotor umfasst eine Rotorwicklung. Im Betrieb fließt ein elektrischer Strom durch die Rotorwicklung und erzeugt ein drehbares magnetisches Feld, das in der Statorwicklung eine elektrische Spannung induziert. Die Fertigung der Statorwicklung für große Turbogeneratoren ist sehr aufwändig und erfordert einen hohen Aufwand an Handarbeit. Die Statorwicklung umfasst einen Wickelkopf, der einzelne Stabenden aufweist, die mit einer Laschenverbindung verlötet werden. Das Verlöten ist sehr aufwändig, da die Laschenverbindung präzise ausgerichtet werden muss und außerdem eine hohe Anzahl von Lötstellen vorhanden ist.

Derzeit wird das Ausrichten der Stabenden und das Verlöten dieser mit der Laschenverbindung in aufwändiger Handarbeit durchgeführt.

Es ist Aufgabe der Erfindung, hier Abhilfe zu schaffen, und ein Automatisierungssystem anzugeben, mit dem das Verlöten einfacher und schneller geht. Gelöst wird diese Aufgabe durch ein Automatisierungssystem zur Herstellung einer Statorwicklung einer elektrodynamischen Maschine, insbesondere eines elektrischen Generators, umfassend einen Grundrahmen, eine Blechpakettrageeinrichtung, die auf dem Grundrahmen angeordnet ist und zum Tragen eines Blechpakets ausgebildet ist, jeweils zumindest einen Roboter auf je einer Seite des Blechpakets und einer Datenbank, die zum Ansteuern der Roboter ausgebildet ist.

Desweiteren wird die Aufgabe gelöst durch ein Verfahren zur Herstellung einer Statorwicklung einer elektrodynamischen Maschine, wobei die Statorwicklung einen Ständerwickelkopf aufweist und auf einer Blechpakettrageeinrichtung, die in einem Grundrahmen angeordnet ist, abgelegt wird, wobei auf jeder Seite des Blechpakets ein Roboter angeordnet wird, wobei mit einer Datenbank der Roboter angesteuert wird, wobei der Ständerwickelkopf mit dem Roboter verlötet wird.

Vorteilhafte Weiterbildungen sind in den Unteransprüchen angegeben.

Mit der Erfindung wird somit das Ziel verfolgt, eine schnelle Herstellung einer Statorwicklung zu ermöglichen.

Dazu wird erfindungsgemäß ein automatisierter Prozessablauf vorgeschlagen, der das Verlöten der Ständerstabenden mit Hilfe von Robotern ermöglicht. Das Automatisierungssystem umfasst einen Grundrahmen, eine Blechpakettrageeinrichtung, und zumindest einen Roboter je Seite und eine intelligente Datenbank. Der Grundrahmen ist hierbei als ein mehrere Quadratmeter großer Rahmen ausgebildet, auf dem die Blechpakettrageeinrichtung sowie die Roboter an genau definierten Positionen angeordnet sind.

Die Blechpakettrageeinrichtung ist eine Einrichtung, auf der das Blechpaket auf einer genau definierten Position abgelegt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Gleiche Bauteile oder Bauteile mit gleicher Funktion sind dabei mit gleichen Bezugszeichen gekennzeichnet.

Es zeigen:
- Figur 1: eine schematische Darstellung des Automatisierungssystems;
- Figur 2: eine perspektivische Darstellung eines Teils des Ständerwickelkopfes.

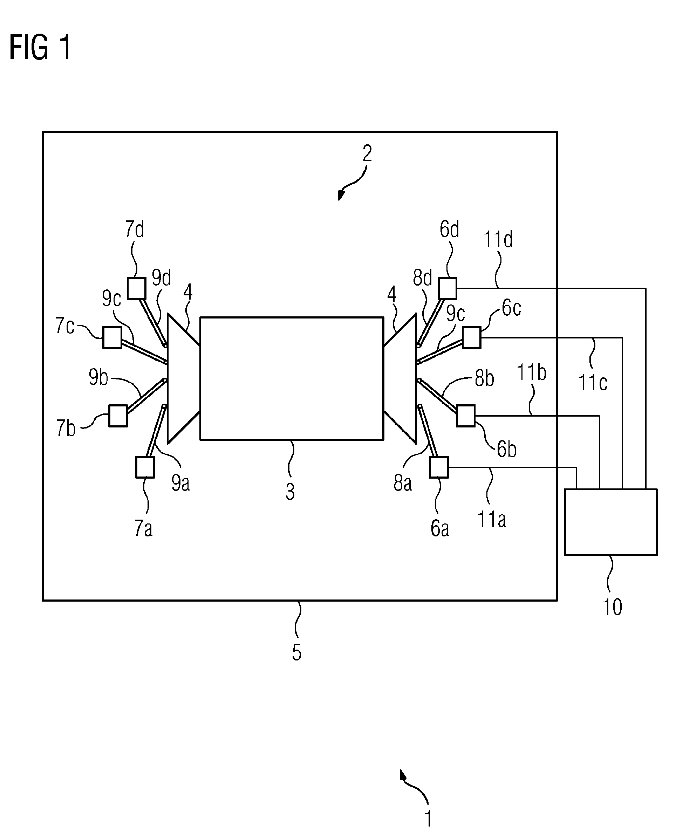

Die Figur 1 zeigt eine perspektivische Ansicht des Automatisierungssystems 1. Das Automatisierungssystem 1 ist zur Herstellung einer Statorwicklung 2 einer elektrodynamischen Maschine (nicht dargestellt), insbesondere eines elektrischen Generators ausgebildet. Die Statorwicklung 2 umfasst ein Blechpaket 3 und jeweils an den Enden einen Ständerwickelkopf 4. Das Automatisierungssystem 1 umfasst ferner einen Grundrahmen 5 und eine Blechpakettrageeinrichtung (nicht näher dargestellt), die auf dem Grundrahmen 5 angeordnet ist und zum Tragen des Blechpakets 3 ausgebildet ist. Auf je einer Seite des Blechpakets 3 sind vier Roboterarme 8a, 8b, 8c, 8d und 9a, 9b, 9c, 9d angeordnet. Die Roboter 6a, 6b, 6c, 6d und 7a, 7b, 7c, 7d umfassen jeweils einen Roboterarm 8a, 8b, 8c, 8d am Roboter 6a, 6b, 6c, 6d sowie weitere Roboterarme 9a, 9b, 9c, 9d an den Robotern 7a, 7b, 7c, 7d.

Desweiteren ist eine intelligente Datenbank 10 angeordnet, die über Datenleitungen 11a, 11b, 11c, 11d jeweils mit den Robotern 6a, 6b, 6c, 6d und 7a, 7b, 7c, 7d datentechnisch gekoppelt sind. Die intelligente Datenbank 10 ist zum Ansteuern der Roboterarme 8a, 8b, 8c, 8d und 9a, 9b, 9c, 9d ausgebildet. Der Übersichtlichkeit wegen sind die Datenleitungen von der Datenbank 10 zu den Robotern 7a, 7b, 7c, 7d in der Figur 1 nicht dargestellt.

Die Statorwicklung 2 weist einen Ständerwickelkopf 4 auf, wobei das Automatisierungssystem 1 zum Verlöten des Ständerwickelkopfes 4 ausgebildet ist.

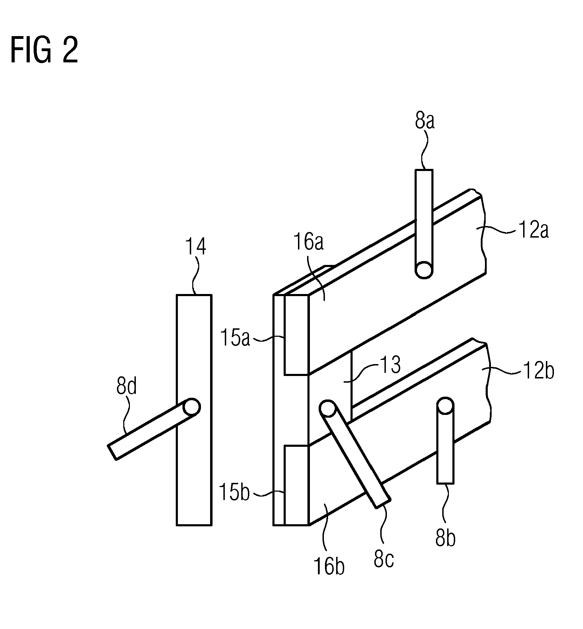

Die Figur 2 zeigt einen Teil des Ständerwickelkopfes 4. Der Ständerwickelkopf 4 weist einen ersten Ständerstab 12a und einen zweiten Ständerstab 12b auf. Das Automatisierungssystem 1 ist zum Verlöten des ersten Ständerstabs 12a mit dem zweiten Ständerstab 12b ausgebildet. Der erste Ständerstab 12a wird über eine Laschenverbindung 13 verlötet.

Das Automatisierungssystem 1 ist derart ausgebildet, dass der erste Roboterarm 8a zum Positionieren des ersten Ständerstabes 12a ausgebildet ist. Der zweite Roboterarm 8b ist zum Positionieren des zweiten Ständerstabes 12b ausgebildet. Der dritte Roboterarm 8c ist zum Positionieren der Laschenverbindung 13 zwischen dem ersten Ständerstab 12a und dem zweiten Ständerstab 12b ausgebildet. Der vierte Roboterarm 8d ist zum Positionieren eines Lötgeräts 14 derart ausgebildet, dass die Laschenverbindung 13 mit dem ersten Ständerstab 12a und dem zweiten Ständerstab 12b verlötet wird. Die Laschenverbindung 13 wird nach einem Fertigungsschritt über eine erste Lötstelle 15a und eine zweite Lötstelle 15b mit dem ersten Ständerstab 12a und dem zweiten Ständerstab 12b verlötet.

Das Lötgerät ist hierbei als Induktivlötgerät ausgebildet oder als ein Lötgerät ausgebildet zum Löten mittels eines elektrischen Stroms.

Die Herstellung der Statorwicklung 2 folgt einem automatisierten Prozessablauf, der das Verlöten der Ständerstabenden 16a und 16b mit Hilfe der Roboter 6a, 6b, 6c, 6d sowie 7a, 7b, 7c, 7d ermöglicht. Der Grundrahmen 5 ist ein mehrere Quadratmeter großer Rahmen, auf dem die Blechpakettrageeinrichtung (nicht näher dargestellt) sowie die Roboter 6a, 6b, 6c, 6d und 7a, 7b, 7c, 7d an genau definierten Orten positioniert sind. Die Blechpakettrageeinrichtung ist eine Einrichtung, auf der das Blechpaket 4 in einer genau definierten Position abgelegt wird. Dabei ist die Blechpakettrageeinrichtung so ausgebildet, dass das Blechpaket 3 mit Schrittmotoren drehbar angeordnet ist. Die Roboterarme 8a, 8b, 8c, 8d und 9a, 9b, 9c, 9d können sich in allen drei Achsen bewegen und können verschiedene Werkzeuge wie Greifwerkzeuge, Laserabstandsmessgeräte usw. an den Armenden von einer Tischplatte aus aufnehmen. Dafür ist der Roboterarm 8a, 8b, 8c, 8d sowie 9a, 9b, 9c, 9d mit einer entsprechenden Steuerung versehen.

In der intelligenten Datenbank 10 sind die Konstruktionsdaten der Ständerwicklung 2 und des Blechpakets 3 einschließlich aller dreidimensionalen Koordinaten der Ständerwickelköpfe 4 enthalten. Desweiteren enthält die Datenbank 10 die vermessenen geometrischen Daten der gefertigten Ständerstäbe einschließlich der Ständerstabnummern, die bei der Fertigung der Ständerstäbe als Barcodes auf die Ständerstände geklebt werden. Darüber hinaus enthält die Datenbank die vermessenen Daten des Blechpakets 3 sowie eine Software, die auf den Konstruktionsdaten und den gemessenen geometrischen Daten der Ständerstäbe und des Blechpakets die Raumkoordinaten eines jeden gefertigten und in das Blechpaket 3 eingelegten Stabes im Wickelkopf 4 berechnen kann.

Der Prozessablauf zur Herstellung der Ständerwicklung wird folgendermaßen dargestellt: in einem ersten Schritt werden der erste Ständerstab 12a und der zweite Ständerstab 12b mit dem zu verlötenden ersten Stabende 16a und 16b im Blechpaket 3 per Hand oder mittels Roboter eingebaut.
- Schritt 1:: Es werden vier Roboterarme eingesetzt (8a, 8b, 8c, 8d);
- Schritt 2:: Roboterarm 8a und Roboterarm 8b nehmen an einem Werkzeugtisch Laserabstandsmessgeräte auf (nicht dargestellt);
- Schritt 3:: Roboterarm 8a und Roboterarm 8b bewegen sich mittels der in der Datenbank 10 berechneten Koordinaten der zu verlötenden Stabenden 16a und 16b in deren Richtung und Vermessen mit den Laserabstandsmessgeräten die genaue Lage der Stabenden 16a und 16b im Raum;
- Schritt 4:: Roboterarm 8a und 8b legen an dem Werkzeugtisch die Laserabstandsmessgeräte ab und nehmen dort Greifwerkzeuge auf;
- Schritt 5:: Roboterarm 8a und 8b bewegen sich zu den Stabenden 8a, 8b, greifen diese und bringen diese durch geringfügige Bewegungen in eine Position, die den berechneten Ortskoordinaten am nächsten kommen und die das Verlöten der Stabenden 16a und 16b mit der Laschenverbindung 13 erlaubt. Die veränderten Positionen werden durch die Roboterarme 8a und 8b zurück an die Datenbank 10 gemeldet;
- Schritt 6:: Roboterarm 8c nimmt auf dem Werkzeugtisch ein Schleifwerkzeug auf;
- Schritt 7:: Roboterarm 8c schleift die zu verlötenden Stabenden an den Lötstellen blank;
- Schritt 8:: Roboterarm 8c legt auf den Werkzeugtisch das Schleifwerkzeug und nimmt ein Greifwerkzeug auf;
- Schritt 9:: Roboterarm 8c bewegt nun vorher mit Lötzinn beschichtete Laschen in ihre berechnete Position an den Stabenden 16a und 16b;
- Schritt 10:: Roboterarm 8d nimmt auf dem Werkzeugtisch ein Induktivlötgerät auf;
- Schritt 11:: Roboterarm 8d bewegt sich nun zu dieser Lötstelle und führt durch induktive Erwärmung die Lötung durch.

Sofern anstatt der Induktivlötung eine Lötung durch von außen zugeführten Strom durchgeführt wird, ändert sich der Prozessablauf wie folgt:
- Schritt 10:: Roboterarm 8d nimmt auf dem Werkzeugtisch ein Schleifwerkzeug auf;
- Schritt 11:: Roboterarm 8d schleift die Stromkontaktstellen an den Stabenden 16a und 16b blank;
- Schritt 12:: weitere Roboterarme 8e und 8f (nicht dargestellt) sind mit Greifwerkzeugen und Stromanschlüssen versehen und bewegen sich zu den Stabenden 16a und 16b und umfassen an den Stromkontaktstellen die Stabenden 16a und 16b;
- Schritt 13:: Schießen von elektrischem Strom über die Stromkontaktstellen zu der Lötstelle und Erwärmung dieser, da sie den höheren Widerstand aufweisen;
- Schritt 14:: mit einer Spannungsabfallmessung an den Stromanschlüssen von den Roboterarmen 8e und 8f kann dann noch die Qualität der Lötverbindung überprüft werden.

Die oben beschriebene Prozessführung gilt sinngemäß auch für die Roboterarme 9a, 9b, 9c, 9d und den Robotern 7a, 7b, 7c, 7d.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Automatisierungssystem zur Herstellung einer Statorwicklung (4) einer elektrodynamischen Maschine,
insbesondere eines elektrischen Generators,
umfassend
einen Grundrahmen (5),
eine Blechpakettrageeinrichtung, die auf dem Grundrahmen (5) angeordnet ist und zum Tragen eines Blechpakets (3) ausgebildet ist,
jeweils zumindest einen Roboter (6a, 6b, 6c, 6d; 7a, 7b, 7c, 7d) auf je einer Seite des Blechpakets (3) und einer Datenbank (10), die zum Ansteuern der Roboter (6a, 6b, 6c, 6d; 7a, 7b, 7c, 7d) ausgebildet ist.

2. Automatisierungssystem nach Anspruch 1,
wobei die Statorwicklung (2) einen Ständerwickelkopf (4) aufweist,
wobei das Automatisierungssystem (1) zum Verlöten des Ständerwickelkopfes (4) ausgebildet ist.

3. Automatisierungssystem nach Anspruch 2,
wobei der Ständerwickelkopf (4) einen ersten Ständerstab (12a) und zweiten Ständerstab (12b) umfasst und das Automatisierungssystem (1) zum Verlöten des ersten Ständerstabs (12a) mit dem zweiten Ständerstab (12b) ausgebildet ist.

4. Automatisierungssystem nach einem der vorhergehenden Ansprüche,
wobei der Roboter einen ersten Roboterarm (8a, 9a), einen zweiten Roboterarm (8b, 9b), einen dritten Roboterarm (8c, 9c) und einen vierten Roboterarm (8d, 9d) umfasst,
wobei der erste Roboterarm (8b, 9b) zum Positionieren des ersten Ständerstabs (12a) ausgebildet ist,
wobei der zweite Roboterarm (8b, 9b) zum Positionieren des zweiten Ständerstabs (12b) ausgebildet ist,
wobei der dritte Roboterarm (8c, 9c) zum Positionieren einer Laschenverbindung (13) zwischen dem ersten Ständerstab (12a) und zweiten Ständerstab (12b) ausgebildet ist,
wobei der vierte Roboterarm (8d, 9d) zum Positionieren eines Lötgeräts (14) ausgebildet ist, derart, dass die Laschenverbindung (13) mit dem ersten Ständerstab (12a) und dem zweiten Ständerstab (12b) verlötet wird.

5. Automatisierungssystem nach einem der vorhergehenden Ansprüche,
wobei die Datenbank (10) zum Ansteuern des Roboters (6a, 6b, 6c, 6d; 7a, 7b, 7c, 7d) ausgebildet ist.

6. Automatisierungssystem nach Anspruch 4,
wobei das Lötgerät als Induktivlötgerät ausgebildet ist oder als ein Lötgerät (14) ausgebildet zum Löten mittels eines elektrischen Stroms.

7. Verfahren zum Herstellen einer Statorwicklung einer elektrodynamischen Maschine,
wobei die Statorwicklung (2) einen Ständerwickelkopf (4) aufweist und auf einer Blechpakettrageeinrichtung, die in einem Grundrahmen (5) angeordnet ist, abgelegt wird,
wobei auf jeder Seite des Blechpakets (3) ein Roboter (6a, 6b, 6c, 6d; 7a, 7b, 7c, 7d) angeordnet wird,
wobei mit einer Datenbank (10) der Roboter (6a, 6b, 6c, 6d; 7a, 7b, 7c, 7d) angesteuert wird,
wobei der Ständerwickelkopf (4), mit dem Roboter (6a, 6b, 6c, 6d; 7a, 7b, 7c, 7d) verlötet wird.
